# EUROPÄISCHE PATENTANMELDUNG

(11) **EP 2 813 910 A1**
(43) Veröffentlichungstag der Anmeldung: **17.12.2014**
(21) Anmeldenummer: 13171199.6
(22) Anmeldetag: 10.06.2013
(51) Int. Cl.: G05B 19/05, G05B 19/042, G05B 9/02

(54) **Bedienhandgerät mit kombinierter Signalauswertung**

(71) Anmelder: Siemens Aktiengesellschaft, 80333 München (DE)
(72) Erfinder: Bretschneider, Jochen, 73732 Esslingen (DE); Eberlein, Werner, 91054 Erlangen (DE); Draeger, Ole, 91096 Möhrendorf (DE)

(57) **Zusammenfassung**

Ein Bedienhandgerät (6) für eine industrielle technische Anlage (1) umfasst eine Eingabeeinrichtung (7) und mehrere der Aggregate (11 bis 15) Näherungssensor (11), Beschleunigungssensor (12), Orientierungssensor (13), Positionsermittlungseinrichtung (14) und Bilderfassungseinrichtung (15). Von einem Benutzer (3) des Bedienhandgeräts (6) über die Eingabeeinrichtung (7) eingegebene Befehle und Ausgangssignale der Aggregate (11 bis 16) werden einer Auswertungseinrichtung (9) des Bedienhandgeräts (6) zugeführt. Die Auswertungseinrichtung (9) wertet die Befehle und die Ausgangssignale aus und übermittelt in Abhängigkeit von der Auswertung Steuerbefehle an eine Steuereinrichtung (2) der industriellen technischen Anlage (1). Die Auswertungseinrichtung (9) vergleicht im Rahmen der Auswertung die Ausgangssignale der Aggregate (11 bis 16) mit vorbestimmten ersten Signalmustern. Sie übermittelt Steuerbefehle, welche eine Aktivierung von Komponenten (4) der industriellen technischen Anlage (1) bewirken, nur dann an die Steuereinrichtung (2), wenn der Benutzer (3) einen die Aktivierung der Komponente (4) anfordernden Befehl vorgibt und die Ausgangssignale der Aggregate (11 bis 16) mit einem der vorbestimmten ersten Signalmuster übereinstimmen. Anderenfalls übermittelt sie die Steuerbefehle nicht.

## Beschreibung

Die vorliegende Erfindung betrifft ein Betriebsverfahren für ein Bedienhandgerät für eine industrielle technische Anlage,
- wobei das Bedienhandgerät eine Eingabeeinrichtung umfasst,
- wobei das Bedienhandgerät mehrere der Aggregate Näherungssensor, Beschleunigungssensor, Orientierungssensor, Positionsermittlungseinrichtung und Bilderfassungseinrichtung umfasst,
- wobei von einem Benutzer des Bedienhandgeräts über die Eingabeeinrichtung eingegebene Befehle und Ausgangssignale der Aggregate einer Auswertungseinrichtung des Bedienhandgeräts zugeführt werden,
- wobei die Auswertungseinrichtung die Befehle und die Ausgangssignale auswertet und in Abhängigkeit von der Auswertung Steuerbefehle an eine Steuereinrichtung der industri¬ellen technischen Anlage übermittelt.
   Die vorliegende Erfindung betrifft weiterhin ein Bedienhandgerät für eine industrielle technische Anlage,
- wobei das Bedienhandgerät eine Eingabeeinrichtung umfasst,
- wobei das Bedienhandgerät mehrere der Aggregate Näherungssensor, Beschleunigungssensor, Orientierungssensor, Positionsermittlungseinrichtung und Bilderfassungseinrichtung umfasst,
- wobei das Bedienhandgerät eine Auswertungseinrichtung umfasst, der von einem Benutzer des Bedienhandgeräts über die Eingabeeinrichtung eingegebene Befehle und Ausgangssignale der Aggregate zugeführt werden,
- wobei die Auswertungseinrichtung derart ausgebildet ist, dass sie die Befehle und die Ausgangssignale auswertet und in Abhängigkeit von der Auswertung Steuerbefehle an eine Steuereinrichtung der industriellen technischen Anlage übermittelt.

Derartige Betriebsverfahren und derartige Bedienhandgeräte sind allgemein bekannt.

Zur Inbetriebnahme, Einstellung und Optimierung von Bearbeitungen bei industriellen technischen Anlagen - beispielsweise Maschinen - muss der Benutzer oftmals mit reduzierter Sicherheit arbeiten. Beispielsweise muss der Benutzer sich innerhalb eines Gefahrenbereichs der technischen Anlage (Maschine) bewegen oder sind Schutztüren geöffnet und dergleichen mehr. Beispiele derartiger Betriebssituationen sind der Einrichtbetrieb einer Maschine bei geöffneter Schutztür, ein Verfahren von Achsen, während der Benutzer sich im Gefahrenbereich (= Verfahrbereich) der Achsen aufhält, die Bedienung eines Kranes bei Aufenthalt unter der Last, das Einrichten einer Presse bei geöffneten Pressenwerkzeugen und dergleichen mehr.

In derartigen Betriebssituationen steht die Sicherheit des Benutzers im Vordergrund automatisierungstechnischer Maßnahmen. Insbesondere müssen Aktionen des Benutzers durch geeignete Maßnahmen auf der Automatisierungsseite abgesichert werden. Dies erfolgt im Stand der Technik durch sichere Ausgestaltung der Kommunikation zwischen dem Benutzer und der Steuereinrichtung der industriellen technischen Anlage und eine explizite Zustimmung des Benutzers bei gefahrenträchtigen Aktionen. Beispielsweise werden sicherheitsrelevante Signale wie Notaus und dergleichen zweikanalig abgefragt und ist zur tatsächlichen Auslösung einer gefahrenträchtigen Aktion zusätzlich zur eigentlichen Vorgabe der Aktion die Betätigung eines separaten Zustimmtasters durch den Benutzer erforderlich.

Zur Steuerung der industriellen technischen Anlage im Rahmen der Inbetriebnahme, Einstellung und Optimierung werden oftmals mobile Bedienhandgeräte verwendet, damit der Benutzer die technische Anlage bedienen kann, obwohl er sich selbst im Gefahrenbereich aufhält. Derartige Geräte sind üblicherweise aufwändige Sonderanfertigungen, welche eine relativ geringe Flexibilität bieten. Die Kommunikation zwischen dem Bedienhandgerät und der Steuereinrichtung erfolgt alternativ kabelgebunden oder kabellos.

Die Aufgabe der vorliegenden Erfindung besteht darin, Möglichkeiten zu schaffen, mittels derer auf einfache und zuverlässige Weise die Sicherheit bei der Erkennung, dass der Benutzer eine Aktivierung einer Komponente der industriellen technischen Anlage tatsächlich angefordert hat, erhöht werden kann.

Die Aufgabe wird durch ein Betriebsverfahren mit den Merkmalen des Anspruchs 1 gelöst. Vorteilhafte Ausgestaltungen des Betriebsverfahrens sind Gegenstand der abhängigen Ansprüche 2 bis 6.

Erfindungsgemäß wird ein Betriebsverfahren der eingangs genannten Art dadurch ausgestaltet,
- dass die Auswertungseinrichtung im Rahmen der Auswertung die Ausgangssignale der Aggregate mit vorbestimmten ersten Signalmustern vergleicht und
- dass die Auswertungseinrichtung Steuerbefehle, welche eine Aktivierung von Komponenten der industriellen technischen Anlage bewirken, an die Steuereinrichtung übermittelt, wenn der Benutzer einen die Aktivierung der Komponente anfordernden Befehl vorgibt und die Ausgangssignale der Aggregate mit einem der vorbestimmten ersten Signalmuster übereinstimmen, und die Steuerbefehle anderenfalls nicht übermittelt.

Beispielsweise ist es möglich, im Rahmen der Auswertungen zunächst die Ausgangssignale der einzelnen Aggregate jeweils für sich auszuwerten und für jedes ausgewertete Aggregat ein jeweiliges Votum zu ermitteln und sodann anhand der Voten eine resultierende Auswertung zu ermitteln.

Zur Ermittlung des jeweiligen Votums ist es beispielsweise möglich, wie folgt vorzugehen:
- Das Ausgangssignal des Näherungssensors wird von der Auswertungseinrichtung dahingehend ausgewertet, ob sich ein Objekt in hinreichender Nähe zu dem Näherungssensor befindet. Wenn dies der Fall ist, kann davon ausgegangen werden, dass eine Zustimmung des Benutzers zu einer Aktion vorliegen kann (positives Votum). Anderenfalls erfolgt ein negatives Votum.
- Das Ausgangssignal des Beschleunigungssensors wird von der Auswertungseinrichtung dahingehend ausgewertet, ob die Beschleunigungswerte unterhalb von Beschleunigungsgrenzwerten liegen und/oder Vibrationen ein vorbestimmtes erstes Ausmaß nicht überschreiten. Wenn dies der Fall ist, kann davon ausgegangen werden, dass eine Zustimmung des Benutzers zu einer Aktion vorliegen kann (positives Votum). Anderenfalls erfolgt ein negatives Votum.
- Das Ausgangssignal des Orientierungssensors wird von der Auswertungseinrichtung dahingehend ausgewertet, ob das Bedienhandgerät derart orientiert ist, dass seine Bedienoberfläche nach oben zeigt. Wenn dies der Fall ist, kann davon ausgegangen werden, dass eine Zustimmung des Benutzers zu einer Aktion vorliegen kann (positives Votum). Anderenfalls erfolgt ein negatives Votum.
- Das Ausgangssignal der Positionsermittlungseinrichtung wird von der Auswertungseinrichtung dahingehend ausgewertet, an welcher Stelle im Raum sich das Bedienhandgerät befindet. Nur wenn die Position des Bedienhandgeräts außerhalb vorbestimmter Schutzzonen liegt, kann davon ausgegangen werden, dass eine Zustimmung des Benutzers zu einer Aktion vorliegen kann (positives Votum). Anderenfalls erfolgt ein negatives Votum.
- Die Bilderfassungseinrichtung kann beispielsweise ein Bild erfassen, das - ordnungsgemäßen Betrieb vorausgesetzt - den Benutzer zeigt. Das Ausgangssignal der Bilderfassungseinrichtung kann von der Auswertungseinrichtung dahingehend ausgewertet werden, ob das erfasste Bild den Benutzer tatsächlich zeigt. Wenn dies der Fall ist, kann davon ausgegangen werden, dass eine Zustimmung des Benutzers zu einer Aktion vorliegen kann (positives Votum). Anderenfalls erfolgt ein negatives Votum.

Als resultierende Auswertung kann beispielsweise ein Aktivieren einer Komponente der industriellen technischen Anlage zugelassen werden (= Zustimmung), wenn alle ausgewerteten Ausgangssignale ein positives Votum liefern. In diesem Fall entspricht das (einzige) vorbestimmte erste Signalmuster dem positiven Votum aller ausgewerteten Ausgangssignale. Alternativ ist es möglich, eine vorbestimmte Anzahl negativer Voten zuzulassen. In diesem Fall entsprechen die vorbestimmten ersten Signalmuster den möglichen Kombinationen von Voten, welche die geforderte Anzahl an positiven Voten (oder noch mehr positive Voten) umfassen.

Es ist möglich, alle Ausgangssignale auszuwerten. Alternativ ist es möglich, nur einen Teil der Ausgangssignale im Rahmen der oben erläuterten Auswertung zu verwenden. Weiterhin ist es möglich, Ausgangssignale miteinander zu kombinieren.

Im Rahmen der Steuerung der industriellen technischen Anlage ist es weiterhin erforderlich, zuverlässig eine Notausanforderung zu erkennen. Vorzugsweise ist daher vorgesehen, dass die Auswertungseinrichtung im Rahmen der Auswertung die Ausgangssignale der Aggregate mit vorbestimmten zweiten Signalmustern vergleicht und eine Nothaltanforderung an die Steuereinrichtung übermittelt, wenn die Ausgangssignale der Aggregate mit einem der vorbestimmten zweiten Signalmuster übereinstimmen.

Die Auswertung der Ausgangssignale der Aggregate kann vom Ansatz her analog zur Auswertung der Ausgangssignale der Aggregate hinsichtlich der Zustimmung eine zweistufige Vorgehensweise erfolgen. Insbesondere sind beispielsweise folgende Auswertungen möglich:
- Das Ausgangssignal des Näherungssensors wird von der Auswertungseinrichtung dahingehend ausgewertet, ob sich ein Objekt in hinreichender Nähe zu dem Näherungssensor befindet. Wenn dies nicht der Fall ist, wird eine Notausanforderung ausgelöst. Der Unterschied zur Vorgehensweise bei der Ermittlung, ob eine Zustimmung vorliegt, kann beispielsweise darin bestehen, dass eine andere Sensitivität gewählt ist. Alternativ oder zusätzlich können mehrere Näherungssensoren an verschiedenen Stellen des Bedienhandgeräts angeordnet sein und die Unterscheidung zwischen Zustimmung, Nichtzustimmung und Notausanforderung erfolgt anhand der Anzahl der Näherungssensoren, welche ein Objekt in hinreichender Nähe erkennen.
- Das Ausgangssignal des Beschleunigungssensors wird von der Auswertungseinrichtung dahingehend ausgewertet, ob die Beschleunigungswerte unterhalb von Beschleunigungsgrenzwerten liegen und/oder Vibrationen ein vorbestimmtes zweites Ausmaß überschreiten. Wenn dies der Fall ist, kann davon ausgegangen werden, dass das Bedienhandgerät auf den Boden gefallen ist. In diesem Fall wird eine Notausanforderung ausgelöst.
- Das Ausgangssignal des Orientierungssensors wird von der Auswertungseinrichtung dahingehend ausgewertet, ob das Bedienhandgerät derart orientiert ist, dass seine Bedienoberfläche nach unten oder zur Seite zeigt. Wenn dies der Fall ist, kann eine Notausanforderung ausgelöst werden. Unter Umständen kann diese Auswertung mit anderen Auswertungen - insbesondere des Ausgangssignals des Beschleunigungssensors
- kombiniert werden. Beispielsweise kann eine Notausanforderung ausgelöst werden, wenn nach dem Überschreiten vorbestimmter Beschleunigungsgrenzwerte, die als solche noch nicht unmittelbar eine Notausanforderung auslösen, eine Orientierung der Bedienoberfläche des Bedienhandgeräts nach unten oder zur Seite erkannt wird.
- Das Ausgangssignal der Positionsermittlungseinrichtung wird von der Auswertungseinrichtung dahingehend ausgewertet, an welcher Stelle im Raum sich das Bedienhandgerät befindet. Wenn die Position des Bedienhandgeräts innerhalb vorbestimmter verbotener Zonen liegt, kann eine Notausanforderung ausgelöst werden.

In einer besonders bevorzugten Ausgestaltung des Betriebsverfahrens umfasst das Bedienhandgerät zusätzlich einen Magnetfeldsensor und/oder ein Mikrofon. In diesem Fall ist es möglich, dass die Auswertungseinrichtung im Rahmen des Vergleichs der Ausgangssignale der Aggregate mit den vorbestimmten zweiten Signalmustern Ausgangssignale des Magnetfeldsensors und/oder des Mikrofons berücksichtigt. Beispielsweise sind folgende Auswertungen möglich:
- Das Ausgangssignal des Magnetfeldsensors wird von der Auswertungseinrichtung dahingehend ausgewertet, ob ein vorbestimmtes Grenzmagnetfeld überschritten wird. Wenn dies der Fall ist, kann eine Notausanforderung ausgelöst werden. Diese Vorgehensweise kann ein Zusammenwirken mit Magneten erfordern, welche an vorbestimmten Stellen der industriellen technischen Anlage angeordnet sind.
- Das Ausgangssignal des Mikrofons wird von der Auswertungseinrichtung dahingehend ausgewertet, ob eine vorbestimmte Lautstärke überschritten wird (Panikschrei). Wenn dies der Fall ist, kann eine Notausanforderung ausgelöst werden.

Das Auslösen einer Notausanforderung erfolgt aus Sicherheitsgründen vorzugsweise, sobald auch nur die Auswertung eines einzigen Ausgangssignals für eine Notausanforderung spricht.

Vorzugsweise ist vorgesehen, dass die Auswertungseinrichtung in zyklischen Abständen ein Lebenszeichen an die Steuereinrichtung übermittelt. Dadurch kann erreicht werden, dass die Steuereinrichtung ein Notaus oder eine ähnliche sicherheitsgerichtete Maßnahme ausführt, wenn das Lebenszeichen ausbleibt.

Vorzugsweise ist weiterhin vorgesehen, dass das Bedienhandgerät zusätzlich einen Helligkeitssensor umfasst und dass die Auswertungseinrichtung im Rahmen des Vergleichs der Ausgangssignale der Aggregate mit den vorbestimmten ersten Signalmustern ein Ausgangssignal des Helligkeitssensors berücksichtigt. Beispielsweise kann eine Zustimmung verweigert werden, wenn eine vorbestimmte erste Mindesthelligkeit unterschritten wird.

Im Falle des Vorhandenseins des Helligkeitssensors kann - alternativ oder zusätzlich zur Auswertung im Rahmen des Vergleichs der Ausgangssignale der Aggregate mit den vorbestimmten ersten Signalmustern - eine Notausanforderung ausgelöst werden, wenn eine vorbestimmte zweite Mindesthelligkeit unterschritten wird.

Im Falle des Vorhandenseins eines Beschleunigungssensors umfasst die Auswertung des Ausgangssignals des Beschleunigungssensors vorzugsweise einen Vergleich mit Vibrationen und/oder Beschleunigungsgrenzwerten.

Die Aufgabe wird weiterhin durch ein Bedienhandgerät mit den Merkmalen des Anspruchs 7 gelöst. Vorteilhafte Ausgestaltungen des Bedienhandgeräts sind Gegenstand der abhängigen Ansprüche 8 bis 13.

Erfindungsgemäß wird ein Bedienhandgerät der eingangs genannten Art dadurch ausgestaltet,
- dass die Auswertungseinrichtung derart ausgebildet ist, dass sie im Rahmen der Auswertung die Ausgangssignale der Aggregate mit vorbestimmten ersten Signalmustern vergleicht, Steuerbefehle, welche eine Aktivierung von Komponenten der industriellen technischen Anlage bewirken, an die Steuereinrichtung übermittelt, wenn der Benutzer einen die Aktivierung der Komponente anfordernden Befehl vorgibt und die Ausgangssignale der Aggregate mit einem der vorbestimmten ersten Signalmuster übereinstimmen, und die Steuerbefehle anderenfalls nicht übermittelt.

Die vorteilhaften Ausgestaltungen des Bedienhandgeräts korrespondieren im Wesentlichen mit denen des Betriebsverfahrens. Weiterhin ist es möglich, dass das Bedienhandgerät als Gerät der Kommunikationstechnik ausgebildet ist.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die in Verbindung mit den Zeichnungen näher erläutert werden. Hierbei zeigen in schematischer Darstellung:
- FIG 1: eine industrielle technische Anlage,
- FIG 2: ein Bedienhandgerät und
- FIG 3 und 4: Ablaufdiagramme.

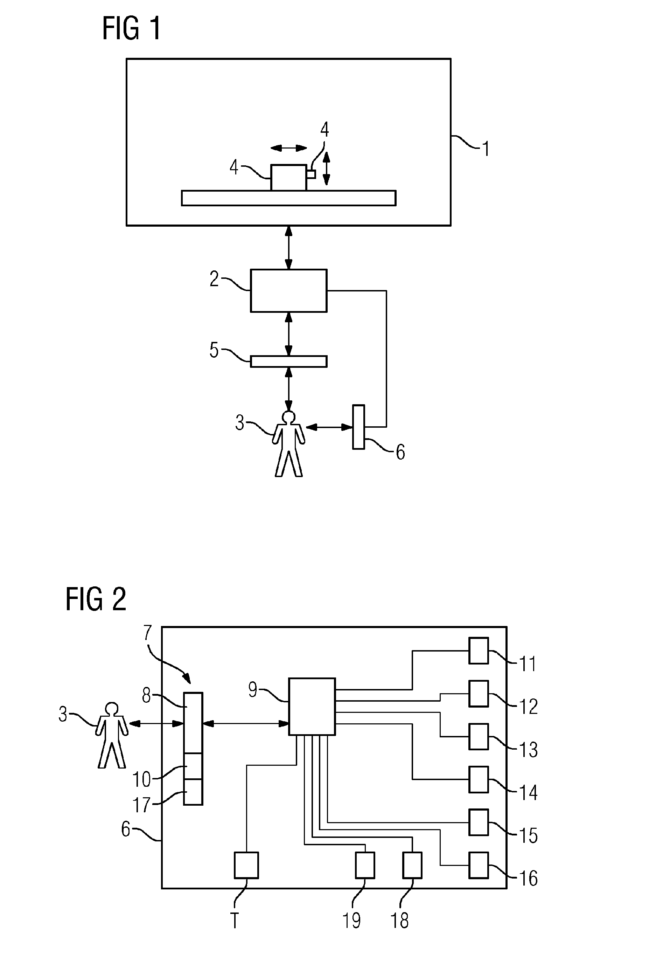

Gemäß FIG 1 wird eine industrielle technische Anlage 1 von einer Steuereinrichtung 2 gesteuert. Die industrielle technische Anlage kann prinzipiell beliebiger Natur sein. Beispielsweise kann es sich um eine Werkzeugmaschine oder eine andere Produktionsmaschine handeln. Es kann sich auch um eine Verpackungsmaschine, eine Abfüllanlage, einen Kran oder eine andere industrielle technische Anlage handeln. Die Steuereinrichtung 2 kann prinzipiell ebenfalls beliebiger Natur sein. Oftmals handelt es sich um eine numerische Steuerung, eine speicherprogrammierbare Steuerung oder eine Kombination einer numerischen Steuerung und einer speicherprogrammierbaren Steuerung.

Der Steuereinrichtung 2 können von einem Benutzer 3 Befehle vorgegeben werden. Aufgrund der von dem Benutzer 3 vorgegebenen Befehle können - je nach vorgegebenen Befehl - Komponenten 4 der industriellen technischen Anlage 1 aktiviert werden. Insbesondere können beispielsweise die Komponenten 4 oftmals verfahren werden, d.h. bewegt werden.

Zur Vorgabe der Befehle steht dem Benutzer 3 in der Regel ein Bedienfeld 5 zur Verfügung. Das Bedienfeld 5 ist, sofern es vorhanden ist, ortsfest außerhalb eines Aktionsbereichs der industriellen technischen Anlage 1 angeordnet. Im Normalbetrieb der industriellen technischen Anlage 1 erfolgt die Vorgabe der Befehle über das Bedienfeld 5. Der Benutzer 3 muss sich bei der Vorgabe der Befehle über das Bedienfeld 5 daher zwangsweise außerhalb des Aktionsbereichs befinden. In speziellen Betriebsarten der industriellen technischen Anlage 1 ist dies jedoch nicht möglich. Beispiele derartiger spezieller Betriebsarten sind ein Einrichtbetrieb bei geöffneter Schutztür, ein Verfahren von Achsen, während der Benutzer 3 sich im Gefahrenbereich (= Verfahrbereich oder Aktionsbereich) der Achsen aufhält, die Bedienung eines Kranes bei Aufenthalt unter der Last, das Einrichten einer Presse bei geöffneten Pressenwerkzeugen und dergleichen mehr. In diesem Fall muss die Ansteuerung der entsprechenden Komponente 4 ebenfalls möglich sein. Dem Benutzer 3 steht zu diesem Zweck ein Bedienhandgerät 6 zur Verfügung. Das Bedienhandgerät 6 ist ein mobiles Gerät, das mit der Steuereinrichtung 2 über eine Verbindungsleitung oder leitungslos kommunizieren kann. Es kann prinzipiell beliebig ausgebildet sein. Vorzugsweise ist das Bedienhandgerät 6 als Gerät der Kommunikationstechnik ausgebildet, beispielsweise als Smartphone, als iPod oder als iPad.

Die sichere Kommunikation des Bedienhandgeräts 6 mit der Steuereinrichtung 2 ist als solche bekannt. Sie kann insbesondere die Nutzung von (mindestens) zwei unterschiedlich ausgeprägten Kommunikationskanälen umfassen, über welche das Bedienhandgerät 6 verfügt. Insbesondere im Falle der Ausgestaltung als Smartphone können beispielsweise zwei der Kanäle Bluetooth, WLAN, GRPS, UMTS und dergleichen mehr genutzt werden.

Wenn Komponenten 4 der industriellen technischen Anlage 1 aktiviert werden sollen, während der Benutzer 3 sich im Gefahrenbereich der industriellen technischen Anlage 1 aufhält, muss gewährleistet sein, dass eine Aktivierung einer bestimmten Komponente 4 tatsächlich vom Benutzer 3 gewünscht ist. Zu diesem Zweck weist das Bedienhandgerät 6 gemäß FIG 2 eine Eingabeeinrichtung 7 auf. Die Eingabeeinrichtung 7 umfasst unter anderem eine Vorgabeeinrichtung 8, mittels derer der Benutzer 3 dem Bedienhandgerät 6 einen entsprechenden Befehl vorgeben kann. Die Vorgabeeinrichtung 8 kann beispielsweise als übliche Tastatur oder als Touchscreen ausgebildet sein.

Das Bedienhandgerät 6 weist weiterhin eine Auswertungseinrichtung 9 auf. Der Auswertungseinrichtung 9 werden die Befehle zugeführt, die vom Benutzer 3 über die Vorgabeeinrichtung 8 in das Bedienhandgerät 6 eingegeben werden. Die Auswertungseinrichtung 9 übermittelt jedoch nur dann den entsprechenden Steuerbefehl an die Steuereinrichtung 2, wenn die Auswertungseinrichtung 9 ermittelt hat, dass der Benutzer 3 der Aktivierung der jeweiligen Komponente 4 ausdrücklich zugestimmt hat. Anderenfalls sperrt die Auswertungseinrichtung 9 die Übermittlung des entsprechenden Ansteuersignals.

Vorzugsweise umfasst die Eingabeeinrichtung 7 zusätzlich zur Vorgabeeinrichtung 8 eine eigenständige, zusätzliche Bestätigungseinrichtung 10. Die Bestätigungseinrichtung 10 kann beispielsweise als Taste ausgebildet sein. Falls die Bestätigungseinrichtung 10 vorhanden ist, ist es für die Zustimmung des Benutzers 3 erforderlich, dass der Benutzer 3 die Bestätigungseinrichtung 10 während der Vorgabe des entsprechenden Befehls oder in einem kleinen Zeitfenster davor oder danach (beispielsweise innerhalb von 2 bis 5 Sekunden) betätigt. Diese Vorgehensweise ist als solche im Stand der Technik bekannt und kann auch im Rahmen der vorliegenden Erfindung realisiert sein. Unabhängig davon, ob diese Realisierung gegeben ist oder nicht, werden jedoch erfindungsgemäß weitere Maßnahmen ergriffen, die nachstehend näher erläutert werden.

Das Bedienhandgerät 6 weist gemäß FIG 2 mehrere Aggregate 11 bis 15 auf. Um welche Aggregate es sich im Einzelnen handelt, kann von der konkreten Ausgestaltung des Bedienhandgeräts 6 abhängen. Zumindest sind jedoch mehrere der folgenden Aggregate 11 bis 15 vorhanden:
- Ein Näherungssensor 11, mittels dessen erfasst wird, ob sich ein Objekt (beispielsweise eine Hand des Benutzers 3) in der Nähe des entsprechenden Näherungssensors 11 befindet. Der Begriff "Nähe" bedeutet in diesem Zusammenhang einen Abstand im einstelligen Zentimeterbereich oder darunter vom entsprechenden Näherungssensor 11. Gegebenenfalls können mehrere Näherungssensoren 11 vorhanden sein.
- Ein Beschleunigungssensor 12, mittels dessen erfasst wird, welchen Beschleunigungen das Bedienhandgerät 6 ausgesetzt ist. Die Auswertung des Ausgangssignals des Beschleunigungssensors 12 kann insbesondere einen Vergleich mit Vibrationen und/oder Beschleunigungsgrenzwerten umfassen.
- Ein Orientierungssensor 13, mittels dessen eine Orientierung des Bedienhandgeräts 6 zumindest relativ zu einer Vertikalrichtung ermittelt werden kann.
- Eine Positionsermittlungseinrichtung 14, mittels derer eine Position des Bedienhandgeräts 6 im dreidimensionalen Raum erfasst werden kann.
- Eine Bilderfassungseinrichtung 15, mittels derer, ausgehend von der Eingabeeinrichtung 7, ein Bild erfasst wird, das unter normalen Umständen zumindest den Kopf, meist auch den Rumpf, des Benutzers 3 umfasst.

Ausgangssignale der genannten Aggregate 11 bis 15 werden ebenfalls der Auswertungseinrichtung 9 zugeführt. Die Auswertungseinrichtung 9 wertet die an sie übermittelten Ausgangssignale aus. Insbesondere vergleicht die Auswertungseinrichtung 9 die Ausgangssignale mit vorbestimmten ersten Signalmustern. Wenn der Vergleich ergibt, dass die Ausgangssignale mit einem der vorbestimmten ersten Signalmuster übereinstimmen, wertet die Auswertungseinrichtung 9 diese Übereinstimmung als Zustimmung des Benutzers 3 zu einer Aktivierung einer Komponente 4 der industriellen technischen Anlage 1.

Die Auswertungseinrichtung 9 prüft also zunächst, ob der Benutzer 3 über die Eingabeeinrichtung 7 (gegebenenfalls einschließlich der Zustimmung über die Bestätigungseinrichtung 10) eine Aktivierung einer Komponente 4 der industriellen technischen Anlage 1 angefordert hat. Diese Prüfung erfolgt (noch) ausschließlich unter Auswertung der Eingaben, die der Benutzer 3 über die Eingabeeinrichtung 7 vorgenommen hat. Wenn diese Prüfung ergibt, dass der Benutzer 3 keine Aktivierung einer Komponente 4 der industriellen technischen Anlage 1 angefordert hat, muss an die Steuereinrichtung 2 (selbstverständlich) auch kein entsprechender Steuerbefehl übermittelt werden. Falls diese Prüfung jedoch ergibt, dass der Benutzer 3 eine Aktivierung einer Komponente 4 der industriellen technischen Anlage 1 angefordert hat, prüft die Auswertungseinrichtung 9 zusätzlich, ob eine Zustimmung des Benutzers 3 vorliegt. Diese Prüfung erfolgt unter Verwertung der Ausgangssignale der Aggregate 11 bis 15. Nur wenn diese Prüfung eine Zustimmung des Benutzers 3 ergeben hat, übermittelt die Auswertungseinrichtung 9 den entsprechenden Steuerbefehl an die Steuereinrichtung 2. Anderenfalls, wenn also
- entweder der Benutzer 3 gar keine Aktivierung angefordert hat oder
- der Benutzer 3 zwar eine Aktivierung angefordert hat, aber die Bestätigungseinrichtung 10 nicht betätigt hat und/oder die Auswertung der Ausgangssignale keine Zustimmung ergibt,
   übermittelt die Auswertungseinrichtung 9 den entsprechenden Steuerbefehl nicht an die Steuereinrichtung 2.

Es ist möglich, dass das Bedienhandgerät 6 zusätzlich zu den oben genannten Aggregaten 11 bis 15 als weiteres Aggregat 16 einen Helligkeitssensor 16 umfasst. In diesem Fall kann die Auswertung der Ausgangssignale der Aggregate 11 bis 16 auch das Ausgangssignal des Helligkeitssensors 16 umfassen. Die Auswertungseinrichtung 9 berücksichtigt also in diesem Fall im Rahmen des Vergleichs der Ausgangssignale der Aggregate 11 bis 16 mit den vorbestimmten ersten Signalmustern zusätzlich das Ausgangssignal des Helligkeitssensors 16.

Im Rahmen der Bedienung der industriellen technischen Anlage 1 kann es geschehen, dass der Benutzer 3 einen Notaus herbeiführen möchte. Diese Möglichkeit ist auch über das Bedienhandgerät 6 möglich. Beispielsweise kann das Bedienhandgerät 6 eine spezielle Notaus-Taste 17 aufweisen, bei deren Betätigung die Auswertungseinrichtung 9 eine Notausanforderung an die Steuereinrichtung 2 übermittelt. Zusätzlich ist es jedoch möglich, dass die Auswertungseinrichtung 9 im Rahmen der Auswertung die Ausgangssignale der Aggregate 11 bis 15 (oder 11 bis 16) nicht nur mit den vorbestimmten ersten Signalmustern, sondern zusätzlich auch mit vorbestimmten zweiten Signalmustern vergleicht. Die zweiten Signalmuster sind von den ersten Signalmustern verschiedene Signalmuster. Wenn die Auswertung ergibt, dass die Ausgangssignale der Aggregate 11 bis 15 (oder 11 bis 16) mit einem der vorbestimmten zweiten Signalmuster übereinstimmen, übermittelt die Auswertungseinrichtung 9 sofort und vorrangig eine Nothaltanforderung an die Steuereinrichtung 2.

Es ist möglich, dass das Bedienhandgerät 6 zusätzlich zu den oben genannten Aggregaten 11 bis 15 bzw. 11 bis 16 als weitere Aggregate 18 und 19 einen Magnetfeldsensor und/oder ein Mikrofon umfasst. In diesem Fall kann die Auswertung der Ausgangssignale der Aggregate 11 bis 15 (16) zumindest bezüglich des Vergleichs mit den zweiten Signalmustern auch die Ausgangssignale des Magnetfeldsensors 18 und/oder des Mikrofons 19 umfassen. Die Auswertungseinrichtung 9 berücksichtigt also in diesem Fall im Rahmen des Vergleichs der Ausgangssignale der Aggregate 11 bis 16 mit den vorbestimmten zweiten Signalmustern auch die Ausgangssignale des Magnetfeldsensors 18 und/oder des Mikrofons 19.

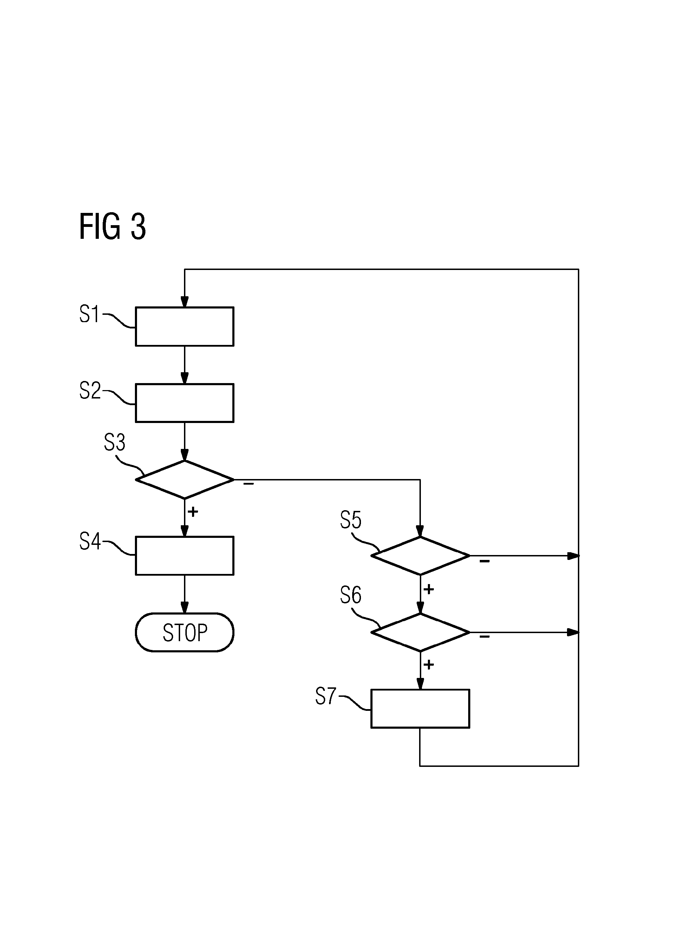

FIG 3 zeigt nochmals die obenstehend erläuterten Vorgehensweisen in Form eines Ablaufdiagramms.

Gemäß FIG 3 nimmt die Auswertungseinrichtung 9 in einem Schritt S1 von den Aggregaten 11 bis 19 deren Ausgangssignale entgegen. In einem Schritt S2 nimmt die Auswertungseinrichtung 9 von der Eingabeeinrichtung 7 die Befehle entgegen, die der Benutzer 3 über die Eingabeeinrichtung 7 eingegeben hat.

In einem Schritt S3 führt die Auswertungseinrichtung 9 eine Auswertung (Prüfung) der Ausgangssignale der Aggregate 11 bis 19 bezüglich der zweiten Signalmuster durch. Sofern sich hier eine Übereinstimmung ergibt, geht die Auswertungseinrichtung 9 zu einem Schritt S4 über, in dem sie eine Notausanforderung an die Steuereinrichtung 2 übermittelt. Anderenfalls geht die Auswertungseinrichtung 9 zu einem Schritt S5 über.

Im Schritt S5 führt die Auswertungseinrichtung 9 eine Auswertung (Prüfung) der Befehle durch, die der Benutzer 3 über die Eingabeeinrichtung 7 eingegeben hat. Wenn diese Prüfung ergibt, dass der Benutzer 3 eine Aktivierung einer Komponente 4 der industriellen technischen Anlage 1 angefordert hat, geht die Auswertungseinrichtung 9 zu einem Schritt S6 über. Anderenfalls geht die Auswertungseinrichtung 9 zum Schritt S1 zurück.

Im Schritt S6 führt die Auswertungseinrichtung 9 eine Auswertung (Prüfung) der Ausgangssignale der Aggregate 11 bis 19 bezüglich der ersten Signalmuster durch. Sofern sich hier eine Übereinstimmung ergibt, geht die Auswertungseinrichtung 9 zu einem Schritt S7 über. Anderenfalls geht die Auswertungseinrichtung 9 zum Schritt S1 zurück.

Im Schritt S7 übermittelt die Auswertungseinrichtung 9 den Steuerbefehl, mit dem der Benutzer 3 eine Aktivierung der Komponente 4 angefordert hat, an die Steuereinrichtung 2. Sodann geht die Auswertungseinrichtung 9 zum Schritt S1 zurück.

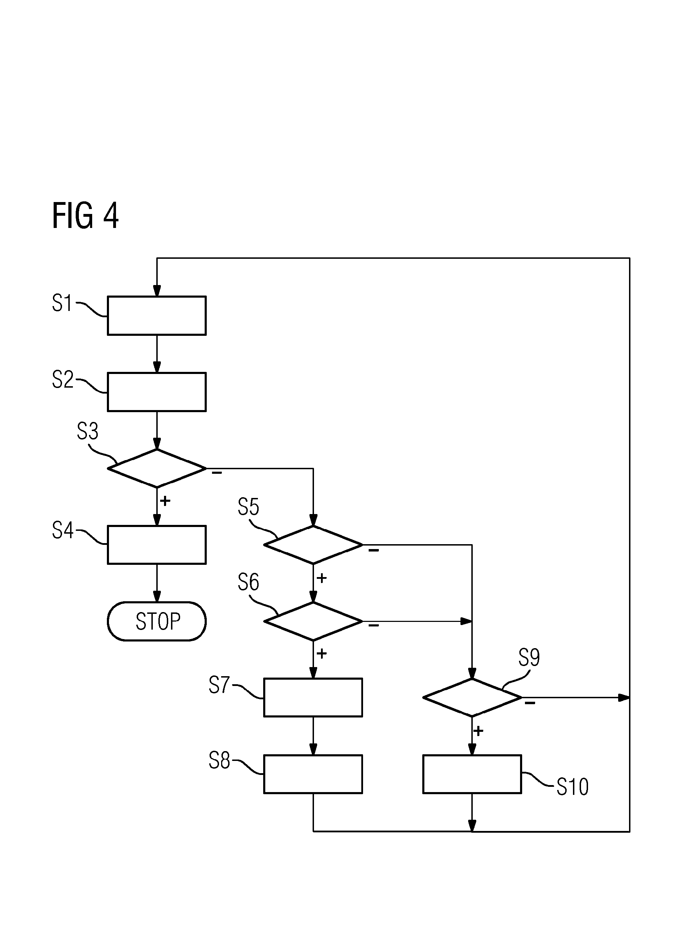

Die Vorgehensweise von FIG 3 kann entsprechend der Darstellung in FIG 4 modifiziert werden. Gemäß FIG 4 ist zusätzlich zu den Schritten S1 bis S7 Schritte S8 bis S10 vorhanden.

Der Schritt S8 ist dem Schritt S7 nachgeordnet. Im Schritt S8 setzt die Auswertungseinrichtung 9 einen Timer 20 zurück. Der Timer 20 ist mit einer vorbestimmten Zeit programmiert.

Der Schritt S9 wird im Nein-Zweig der Schritte S5 und S6 abgearbeitet. Im Schritt S9 prüft die Auswertungseinrichtung 9, ob der Timer 20 abgelaufen ist. Wenn dies nicht der Fall ist, geht die Auswertungseinrichtung 9 direkt zum Schritt S1 zurück. Anderenfalls führt die Auswertungseinrichtung 9 zunächst den Schritt S10 aus und geht erst dann zum Schritt S1 zurück. Im Schritt S10 übermittelt die Auswertungseinrichtung 9 ein Lebenszeichen an die Steuereinrichtung 2. Das Lebenszeichen wird auf Seiten der Steuereinrichtung 2 ausgewertet. Bleibt es aus, führt die Steuereinrichtung 2 automatisch eine sicherheitsgerichtete Aktion aus. Beispielsweise kann sie die industrielle technische Anlage 1 stillsetzen.

Die vorliegende Erfindung weist viele Vorteile auf. Insbesondere kann trotz Verwendung eines Gerätes der Kommunikationstechnik als Bedienhandgerät 6 die funktionale Sicherheit durch ein redundantes Abfragen von mehreren Aggregaten 11 bis 19 deutlich erhöht werden, obwohl die Bedienelemente von Geräten der Kommunikationstechnik bei weitem nicht die gleiche Robustheit und Langlebigkeit wie die Betätigungselemente von speziell zu diesem Zweck entwickelten Bedienhandgeräten aufweisen.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Betriebsverfahren für ein Bedienhandgerät (6) für eine industrielle technische Anlage (1),
- wobei das Bedienhandgerät (6) eine Eingabeeinrichtung (7) umfasst,
- wobei das Bedienhandgerät (6) mehrere der Aggregate (11 bis 16) Näherungssensor (11), Beschleunigungssensor (12), Orientierungssensor (13), Positionsermittlungseinrichtung (14) und Bilderfassungseinrichtung (15) umfasst,
- wobei von einem Benutzer (3) des Bedienhandgeräts (6) über die Eingabeeinrichtung (7) eingegebene Befehle und Augangssignale der Aggregate (11 bis 16) einer Auswertungseinrichtung (9) des Bedienhandgeräts (6) zugeführt werden,
- wobei die Auswertungseinrichtung (9) die Befehle und die Ausgangssignale auswertet und in Abhängigkeit von der Auswertung Steuerbefehle an eine Steuereinrichtung (2) der industriellen technischen Anlage (1) übermittelt,
- wobei die Auswertungseinrichtung (9) im Rahmen der Auswertung die Ausgangssignale der Aggregate (11 bis 16) mit vorbestimmten ersten Signalmustern vergleicht und
- wobei die Auswertungseinrichtung (9) Steuerbefehle, welche eine Aktivierung von Komponenten (4) der industriellen technischen Anlage (1) bewirken, an die Steuereinrichtung (2) übermittelt, wenn der Benutzer (3) einen die Aktivierung der Komponente (4) anfordernden Befehl vorgibt und die Ausgangssignale der Aggregate (11 bis 16) mit einem der vorbestimmten ersten Signalmuster übereinstimmen, und die Steuerbefehle anderenfalls nicht übermittelt.

2. Betriebsverfahren nach Anspruch 1,
**dadurch gekennzeichnet, dass** die Auswertungseinrichtung (9) im Rahmen der Auswertung die Augangssignale der Aggregate (11 bis 16) mit vorbestimmten zweiten Signalmustern vergleicht und eine Nothaltanforderung an die Steuereinrichtung (2) übermittelt, wenn die Ausgangssignale der Aggregate (11 bis 16) mit einem der vorbestimmten zweiten Signalmuster übereinstimmen.

3. Betriebsverfahren nach Anspruch 2,
**dadurch gekennzeichnet, dass** das Bedienhandgerät (6) zusätzlich einen Magnetfeldsensor (18) und/oder ein Mikrofon (19) umfasst und dass die Auswertungseinrichtung (9) im Rahmen des Vergleichs der Ausgangssignale der Aggregate (11 bis 16) mit den vorbestimmten zweiten Signalmustern Ausgangssignale des Magnetfeldsensors (18) und/oder des Mikrofons (19) berücksichtigt.

4. Betriebsverfahren nach Anspruch 1, 2 oder 3,
**dadurch gekennzeichnet, dass** die Auswertungseinrichtung (9) in zyklischen Abständen ein Lebenszeichen an die Steuereinrichtung (2) übermittelt.

5. Betriebsverfahren nach einem der obigen Ansprüche,
**dadurch gekennzeichnet, dass** das Bedienhandgerät (6) zusätzlich einen Helligkeitssensor (16) umfasst und dass die Auswertungseinrichtung (9) im Rahmen des Vergleichs der Ausgangssignale der Aggregate (11 bis 16) mit den vorbestimmten ersten Signalmustern ein Ausgangssignal des Helligkeitssensors (16) berücksichtigt.

6. Betriebsverfahren nach einem der obigen Ansprüche,
**dadurch gekennzeichnet, dass** die Auswertung im Falle des Vorhandenseins eines Beschleunigungssensors (12) einen Vergleich mit Vibrationen und/oder Beschleunigungsgrenzwerten umfasst.

7. Bedienhandgerät für eine industrielle technische Anlage,
- wobei das Bedienhandgerät eine Eingabeeinrichtung (7) umfasst,
- wobei das Bedienhandgerät mehrere der Aggregate (11 bis 16) Näherungssensor (11), Beschleunigungssensor (12), Orientierungssensor (13), Positionsermittlungseinrichtung (14) und Bilderfassungseinrichtung (15) umfasst,
- wobei das Bedienhandgerät eine Auswertungseinrichtung (9) umfasst, der von einem Benutzer (3) des Bedienhandgeräts über die Eingabeeinrichtung (7) eingegebene Befehle und Ausgangssignale der Aggregate (11 bis 16) zugeführt werden,
- wobei die Auswertungseinrichtung (9) derart ausgebildet ist, dass sie die Befehle und die Ausgangssignale auswertet und in Abhängigkeit von der Auswertung Steuerbefehle an eine Steuereinrichtung (2) der industriellen technischen Anlage (1) übermittelt,
- wobei die Auswertungseinrichtung 9) derart ausgebildet ist, dass sie im Rahmen der Auswertung die Ausgangssignale der Aggregate mit vorbestimmten ersten Signalmustern vergleicht, Steuerbefehle, welche eine Aktivierung von Komponenten (4) der industriellen technischen Anlage (1) bewirken, an die Steuereinrichtung (2) übermittelt, wenn der Benutzer (3) einen die Aktivierung der Komponente (4) anfordernden Befehl vorgibt und die Ausgangssignale der Aggregate (11 bis 16) mit einem der vorbestimmten ersten Signalmuster übereinstimmen, und die Steuerbefehle anderenfalls nicht übermittelt.

8. Bedienhandgerät nach Anspruch 7,
**dadurch gekennzeichnet, dass** die Auswertungseinrichtung (9) derart ausgebildet ist, dass sie im Rahmen der Auswertung die Ausgangssignale der Aggregate (11 bis 16) mit vorbestimmten zweiten Signalmustern vergleicht und eine Nothaltanforderung an die Steuereinrichtung (2) übermittelt, wenn die Ausgangssignale der Aggregate (11 bis 16) mit einem der vorbestimmten zweiten Signalmuster übereinstimmen.

9. Bedienhandgerät nach Anspruch 8,
**dadurch gekennzeichnet, dass** das Bedienhandgerät zusätzlich einen Magnetfeldsensor (18) und/oder ein Mikrofon (19) umfasst und dass die Auswertungseinrichtung (9) derart ausgebildet ist, dass sie im Rahmen des Vergleichs der Ausgangssignale der Aggregate (11 bis 16) mit den vorbestimmten zweiten Signalmustern Ausgangssignale des Magnetfeldsensors (18) und/oder des Mikrofons (19) berücksichtigt.

10. Bedienhandgerät nach Anspruch 7, 8 oder 9,
**dadurch gekennzeichnet, dass** die Auswertungseinrichtung (9) derart ausgebildet ist, dass sie in zyklischen Abständen ein Lebenszeichen an die Steuereinrichtung (2) übermittelt.

11. Bedienhandgerät nach einem der Ansprüche 7 bis 10,
**dadurch gekennzeichnet, dass** das Bedienhandgerät zusätzlich einen Helligkeitssensor (16) umfasst und dass die Auswertungseinrichtung (9) derart ausgebildet ist, dass sie im Rahmen des Vergleichs der Ausgangssignale der Aggregate (11 bis 16) mit den vorbestimmten ersten Signalmustern ein Ausgangssignal des Helligkeitssensors (16) berücksichtigt.

12. Bedienhandgerät nach einem der Ansprüche 7 bis 11,
**dadurch gekennzeichnet, dass** die Auswertungseinrichtung (9) derart ausgebildet ist, dass die Auswertung im Falle des Vorhandenseins eines Beschleunigungssensors (12) einen Vergleich mit Vibrationen und/oder Beschleunigungsgrenzwerten umfasst.

13. Bedienhandgerät nach einem der Ansprüche 7 bis 12,
**dadurch gekennzeichnet, dass** es als Gerät der Kommunikationstechnik ausgebildet ist.

## Geänderte Patentansprüche

### Geänderte Patentansprüche gemäss Regel 137(2) EPÜ.

**1.** Betriebsverfahren für ein Bedienhandgerät (6) für eine industrielle technische Anlage (1),
- wobei das Bedienhandgerät (6) eine Eingabeeinrichtung (7) umfasst,
- wobei das Bedienhandgerät (6) mehrere der Aggregate (11 bis 16) Näherungssensor (11), Beschleunigungssensor (12), Orientierungssensor (13), Positionsermittlungseinrichtung (14) und Bilderfassungseinrichtung (15) umfasst,
- wobei von einem Benutzer (3) des Bedienhandgeräts (6) über die Eingabeeinrichtung (7) eingegebene Befehle und Ausgangssignale der Aggregate (11 bis 16) einer Auswertungseinrichtung (9) des Bedienhandgeräts (6) zugeführt werden,
- wobei die Auswertungseinrichtung (9) die Befehle und die Ausgangssignale auswertet und in Abhängigkeit von der Auswertung Steuerbefehle an eine Steuereinrichtung (2) der industriellen technischen Anlage (1) übermittelt,
- wobei die Auswertungseinrichtung (9) im Rahmen der Auswertung die Ausgangssignale der Aggregate (11 bis 16) mit vorbestimmten ersten Signalmustern vergleicht und
- wobei die Auswertungseinrichtung (9) Steuerbefehle, welche eine Aktivierung von Komponenten (4) der industriellen technischen Anlage (1) bewirken, an die Steuereinrichtung (2) übermittelt, wenn der Benutzer (3) einen die Aktivierung der Komponente (4) anfordernden Befehl vorgibt und die Ausgangssignale der Aggregate (11 bis 16) mit einem der vorbestimmten ersten Signalmuster übereinstimmen, und die Steuerbefehle anderenfalls nicht übermittelt.

**2.** Betriebsverfahren nach Anspruch 1,
**dadurch gekennzeichnet, dass** die Auswertungseinrichtung (9) im Rahmen der Auswertung die Ausgangssignale der Aggregate (11 bis 16) mit vorbestimmten zweiten Signalmustern vergleicht und eine Nothaltanforderung an die Steuereinrichtung (2) übermittelt, wenn die Ausgangssignale der Aggregate (11 bis 16) mit einem der vorbestimmten zweiten Signalmuster übereinstimmen.
